(19) Europäisches Patentamt
European Patent Office
Office européen des brevets

(11) Publication number: 0 339 507 A2

# (12) EUROPEAN PATENT APPLICATION

(21) Application number: 89107227.4

(51) Int. Cl.[4]: C09D 5/44

(22) Date of filing: 21.04.89

(30) Priority: 23.04.88 JP 100768/88

(43) Date of publication of application:
02.11.89 Bulletin 89/44

(84) Designated Contracting States:
DE FR GB IT SE

(71) Applicant: NIPPON PAINT CO., LTD.
2-1-2, Oyodokita Kita-ku
Osaka-shi Osaka-fu(JP)

(72) Inventor: Tobinaga, Kenshiro
2-32-5, Yuyamadai
Kawanishi-shi Hyogo-ken(JP)
Inventor: Tsushima, Hiroshi
2-17, Kinmitsu-cho
Ashiya-shi Hyogo-ken(JP)
Inventor: Tsuchiya, Yasuyuki
3-8-23, Kuzuhaasahi
Hirakata-shi Osaka-fu(JP)

(74) Representative: Hansen, Bernd, Dr.rer.nat. et al
Hoffmann, Eitle & Partner Patentanwälte
Arabellastrasse 4 Postfach 81 04 20
D-8000 München 81(DE)

## (54) Cathodic electrodeposition paint composition.

(57) A cathodic electrodeposition paint composition which contains:

(A) a resin having an iodine value of 50-500, basic group of 30 - 300 mmol per 100 g of solid content and a molecular weight of 500 - 5,000, and

(B) a resin containing at least two benzene nuclei and one ethylenic vinyl group in one molecule and having acidic group of 5 - 350 mmol per 100 g of solid content and a molecular weight of 500 - 5,000 wherein the ratio of basic group of the component (A) to the acidic group of the component (B) is 1 : 0.03 - 0.5, and is at least partly neutralized with an acid.

EP 0 339 507 A2

# CATHODIC ELECTRODEPOSITION PAINT COMPOSITION

## FIELD OF THE INVENTION

The present invention relates to a cathodic electrodeposition paint composition. More particularly, it relates to a low-temperature curing cathodic electrodeposition paint composition which is suitable for coating plastics and the like.

## BACKGROUND OF THE INVENTION

Resins containing basic groups generate cations in water and, when electrocoated using them, are electrodeposited onto a cathode. This is called "cathodic electrodeposition" system. There is another system, called "anode electrodeposition", wherein resins having acidic groups are neutralized with a base and, when electrodeposited, are deposited onto an anode. The anode electrodeposition system has defects of the elution of the metal to be coated into a paint bath and various kinds of accompanying problems. The cathodic electrodeposition system does not have such defects.

The present inventors have further studied on the cathodic electrodeposition paint compositions, and have provided cathodic electrodeposition paint compositions which have excellent film properties by introducing amino group into low polymerization grade polymer containing C-C double bond and neutralizing the resultant with acid (see, Japanese Patent Laid Open Publication Nos. 51-119727, 52-147638 and 53-16048). These compositions may provide paint film with excellent properties, but they are not preferable because curing temperature is high when they are required to be cured on the surface of plastics and the like.

## SUMMARY OF THE INVENTION

The present inventors have further studied on the above ccmpositions and have attained the present invention.

That is, the present invention provides a cathodic electrodeposition paint composition which contains:

(A) a resin having an iodine value of 50-500, basic group of 30 - 300 mmol per 100 g of solid content and a molecular weight of 500 - 5,000, and

(B) a resin containing at least two benzene nuclei and one ethylenic vinyl group in one molecule and having acidic group of 5 - 350 mmol per 100 g of solid content and a molecular weight of 500 - 5,000
wherein the ratio of basic group of the component (A) to the acidic group of the component (B) is 1 : 0.03 - 0.5, and is at least partly neutralized with an acid.

## DETAILED DESCRIPTION OF THE INVENTION

The resin A of the present invention is a resin with a molecular weight of 500 - 5,000 having basic groups and iodine value (double bond). Examples of such resins include resin which is prepared by epoxidation of low polymerization degree polymer having C-C double bond followed by amination with secondary amine, which is disclosed in US Patent No. 3,789,090, Japanese Patent Publication Nos. 42-17485, 43-27432, 32-7446 and the like. When the iodine value of the component A exceeds 500, stability may be deteriorated with-time and when it is less than 50, curability may be deteriorated. Examples of the basic groups include amino, mercapto and the like. When the amount of the basic group exceeds 300 mmol, corrosion resistance is deteriorated, and when it is less than 30 mmol, it is difficult to solubilize in water. When the molecular weight exceeds 5,000, paint stability is bad and when it is less than 500, workability of the electrodeposition paint becomes worse.

The preferred component A contains 3 - 12 wt% of oxirane oxygen based on polybutadiene and secondary amino group. More particularly, aminated polybutadiene described in Japanese Patent Laid Open Publication No. 53-16048, i.e., it contains:

(1) a polymeric compound with a molecular weight of 500 5,000 and an iodine value (C-C double bond) of 50 - 500 and oxirane oxygen of 3 - 12 wt%, and

(2) 30 - 300 mmol of amine compound based on 100 G of the polymeric compound, which is indicated by the following general formula:

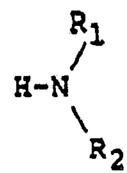

wherein $R_1$ and $R_2$ are $C_{1-20}$ hydrocarbon which may be partly substituted by hydroxy group, and $R_1$ and $R_2$ can form a ring structure and said ring structure may contain unsaturated group. This resin may be prepared, for example, by partially epoxidizing liquid polybutadiene of molecular weight 500 - 5,000 with peroxide to bring oxirane oxygen content to 3 - 12 wt%, and reacting 30 - 300 mmol of primary or secondary amine based on 100 g of the resultant. Further, the component A may contain vinyl group derived from the reaction of oxirane oxygen with unsaturated carboxylic acid, as needed. Examples of the usable unsaturated carboxylic acid include $\alpha,\beta$-unsaturated carboxylic acid of the general formula:

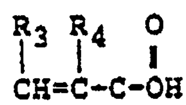

wherein $R_3$ and $R_4$ are hydrogen atoms or methyl groups; unsaturated fatty acid having a molecular weight of 100 -359 containing more than 10 wt% of C-C conjugated double bonds; or a mixture thereof.

The component B used in the present invention may be a resin of 500 - 5,000 molecular weight which contains more than two benzene nuclei and more than one vinyl group (such vinyl group may be derived form the unsaturated fatty acid). This resin is further required to contain 5 - 350 mmol of acidic group per 100 g of solid content. Preferred example of such resin includes a reaction product of partial esterification of epoxy(meth)acrylate resin or epoxy unsaturated fatty acid ester resin with dibasic anhydride or dibasic acid. More preferably, a reaction product of a glycidyl compound of the formula:

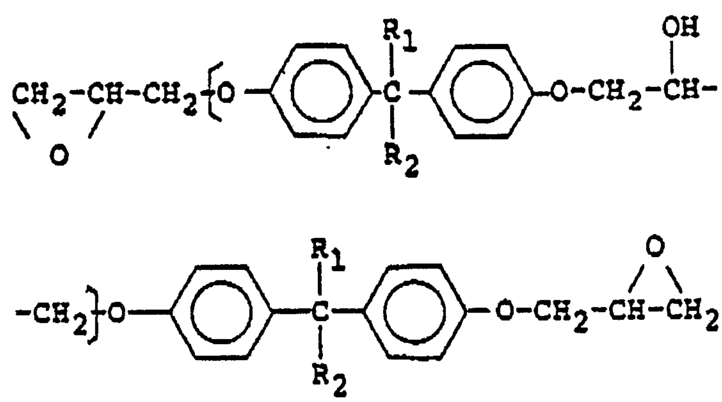

wherein $R_1$ and $R_2$ are hydrogen atoms or methyl groups, n is an interger of 0 - 20, preferably 1-10 with $\alpha,\beta$-unsaturated carboxylic acid of the formula:

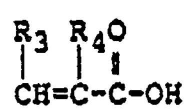

wherein $R_3$ and $R_4$ are hydrogen atoms or methyl groups; unsaturated fatty acid having molecular weight of 100 - 350 which contains more than 10 wt% of C-C double bonds or a mixture thereof is further subjected to, for example, partial esterification with anhydride of dibasic acid or dibasic acid to give a resin containing carboxyl group. It is belived that the component B contains carboxyl group which significantly contributes to curability.

The acidic group of the component (A) is 0.03 - 0.5 mole, preferably, 0.07 - 0.31 mole based on 1 mole of the basic group of the component (B). When it is less than 0.03 mole; low-temperature curability is insufficient and when it exceeds 0.5 mole, it provides drawbacks in workability of electrocoating.

The composition of the present invention may be obtained by partially or totally neutralizing the above components with an acid and dispersing or dissolving it in water. Such an acid may be either mineral or organic acid, and hydrochloric, sulfuric, lactic acid or the like may be used.

As component (C), a water-soluble salt of metal which accelerates oxidation polymerization, for example, a water-soluble salt of metal selected from a group consisting of manganese, cobalt, copper, zing or lead with an organic acid, may be further added to the cathodic electrodeposition composition of the present invention. The amount is 0.005 -1.0 parts by weight of metal based on 100 parts by weight of solid content of the composition. When it is less than 0.005 parts by weight, its curability acceleration effect may be poor and when it is more than 1.0 parts by weight, it provides good curability but undesirably reduces, for example, water resistance and corrosion resistance. The examples of such salts include manganese acetate, manganese lactate, cobalt acetate, zinc acetate, lead acetate, copper acetate and the like.

The composition of the present invention may further contain the component D, i.e., maleinated polybutadiene, and copolymer thereof, $C_{6-24}$ unsaturated monocarboxylic acid and/or dimer thereof. Addition of the component D may accelerate curability and further improve low-temperature curability. When the amount of the component D to be added is less than 0.5 parts by weight, the curability acceleration effect is poor, and when it exceeds 10 parts by weight it undesirably deteriorates corrosion resistance and the like. As such unsaturated monokarboxylic acid or dimer thereof, so-called purified unsaturated fatty acid such as tung oil fatty acid, linseed oil fatty acid, sunflower oil fatty acid, soybean oil fatty acid, dehydrated castor oil fatty acid, castor oil fatty acid, safflower of fatty, tall oil fatty acid, oleic acid, linoleic acid, linolenic acid, tereostearic acid, beef tallow fatty acid, fish oil fatty acid, conjugated unsaturated fatty acid obtained by isomerization of dehydrated castor oil fatty acid, sunflower oil fatty acid and the like, unsaturated monocarboxylic acid such as sorbic acid, cinnamic acid and the like can be used. Further, cyclic unsaturated monocarboxylic acid such as abietic acid obtained form natural rosin, fumaric acid and the like may be used. As dimer, dimer acid obtained from tall oil fatty acid, dimer resin obtained from rosin can be used. The above described unsaturated carboxylic acid or dimer thereof may be used alone or as a mixture thereof.

The composition of the present invention may further contain contain a crosslinking agent as a component E. Example of such crosslinking agent includes, for example, blocked isocyanate, melamine and the like. The amount of the crosslinking agent to be added is 2 - 20 parts by weight. Sufficient crosslinking may not be obtained even when more than 20 parts by weight of the agent is used. When the amount is less than 2 parts by weight, crosslinking is insufficient.

The composition of the present invention may further contain pigments and other additives as needed. As such pigment, for example, those generally used for electrodeposition coating such as iron oxide, lead oxide, strontium chromate, zinc chromate, carbon black, titanium dioxide, talc, aluminum silicate, precipitable barium sulfate, basic lead silicate, ammonium phosophomolybdate, surface-treated kaolin, calcined kaolin, aminosilcate-treated kaolin as well as metallic pigment such as zinc dust, and other extender pigments may be used. Further, nonionic surfactant, cationic surfactant may be used. The amount of such pigment is 3 - 30 parts by weight, preferably, 5 - 20 parts by weight.

The cathodic electrodeposition paint composition of the present invention is excellent in paint stability and provides sufficient cured film upon curing at low temperature, e.g., < 140 °C within 30 minutes. The treatment at such low temperature enables it to be applied to the field, wherein it has not been used, for example, painting of plastics, rubber attachment, casting and the like, without problems. The film obtained using the paint composition of the present invention shows good anti-corrosion.

## EXAMPLE

The present invention will be further illustrated in detail in the following examples, but it is not construed to be limited to them.

## PREPARATION EXAMPLE 1

### Aminated polybutadiene A

Nisseki polybutadiene B-2000 (number-average molecular weight: 2000, 1,2-double bond: 65 %) was epoxidized using peracetic acid to obtain epoxidaized polybutadiene with oxirane oxygen content of 6.4 %.

The resulting epoxidized polybutadiene (1,000 g) and Etyl cellusolve (354 g) were charged in 2 ℓ autoclave, to which dimethylamine (62.1 g) was added, and allowed to react at 150 °C for 5 hours. The unreacted amine was removed by distillation to produce a solution of aminated polybutadiene resin.

The amine value of the resultant was 120 mmol/100 g (solid content). The content of the non-volatil content was 75%.

## PREPARATION EXAMPLE 2

### Aminated polybutadiene B

Nisseki polybutadiene B-2000 (number-average molecular weight: 2000, 1,2-double bond: 65%) was epoxidized using peracetic acid to prepare epoxidized polybutadiene with oxirane oxygen content of 6.4%.

The resulting epoxydized polybutadiene (1,000 g) and Ethyl cellusolve (354 g) were charged in 2 ℓ autoclave, to which was added dimethylamine (62.1 g), and allowed to react at 150 °C. After the unreacted amine was distilled off, the resultant was cooled to 120 °C, to which a mixture of acrylic acid (79.3 g), hydroquinone (7.6 g) and Ethyl cellusolve (26.4 g) was added and allowed to react at 120 °C for 3-3/4 hours.

The amino value of the resultant was 85.2 mmol/100 g, and acid value was 10.0 mmol/100 g and the solid content was 75.4 %

## PREPARATION EXAMPLE 3

### Epoxy ester A

Bisphenol type epoxy resin(1,000 g) having epoxy equivalent of 950 as the following compound obtained by reaction of bisphenol A and epichlorohydrin in the presence of an alkaline catalyst:

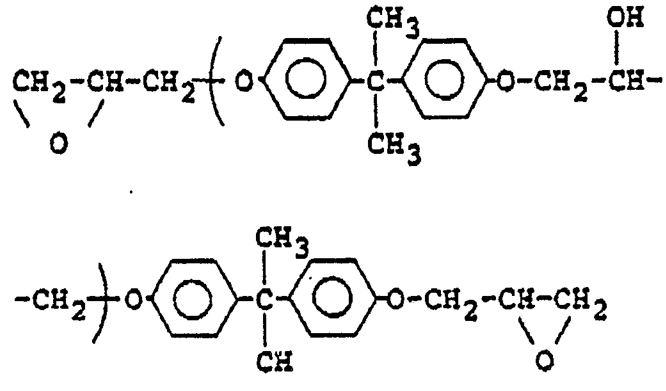

was dissloved in xylol (503 g), to which methacrylic acid (90.6 g), hydroquinone (8 g) and N,N-dimethylaminoethanol (5 g) were added. The resultant was heated to 130 °C and allowed to react for 3 hours. The acid value of the product was 2 mmol/100 g.

Tetrahydrophthalic anhydride (74.8 g) was added to the reaction product, and the resultant was further heated to 110 °C and allowed to react for 1 hour to synthesize resin (component (B)) of the present invention.

The acid value of the product was 30 mmol/100 g (varnish) and solid content was 70 wt%.

## Example 1

The aminated polybutadiene A of Preparation example 1 (267 g) and epoxy ester A of Preparation example 3 (188 g) were mixed until a homogeneous mixture was obtained. Acetic acid (3 g) was added and the resultant was sufficiently stirred and neutralized. Subsequently, deionized water was slowly added to prepare an aqueous solution with solid content of 20 wt%.

The resulting 20 wt% aqueous solution (2,000 g), carbon black (4 g), basic lead silicate (20 g) and glass beads (2,000 g) were charged in 5 ℓ stainless beaker and vigorously stirred using a high speed mixer for 2 hours, then glass beads were removed by filtration. Subsequently, deionized water containing cobalt acetate (1.6 g as cobalt) was added to bring solid content to 16.5 wt%. Thus, an electrode-position paint solution was prepared.

Using the above electrode paint solution, carbon electrode as anode and zinc phosphate treated plate as cathode, cathodic electrodeposition coating was carried out.

## Example 2

Example 1 was repeated wherein the aminated polybutadiene A of Preparation Example 1 (267 g) was substituted by the aminated polybutadiene B of Preparation Example 2 (267). The result of determination of resistance to solvent and emulsion precipitability are shown in Table 1.

## Example 3

Example 2 was repeated wherein tetrahydrophthalic anhydride (74.8 g) to be added to epoxy ester A was substituted by tetrahydrophtalic anhydride (37.4 g), and cobalt acetate was substituted by manganese acetate (2.0 g as manganese). The results of the test are shown in Table 1.

## Example 4

In the same manner as that in Example 2 except that cobalt acetate (1.6 g as cobalt) was not added, test was conducted. The results are shown in Table 1.

## Example 5

Example 2 was repeated wherein maleinated polybutadiene resin (acidic group: 180 mmol/100 g) (31 g) was added. The results are shown in Table 1.

## Comparative Example 1

In the same manner as that in Example 2, except that maleinated polybutadiene resin (acidic group: 180 mmol/100 g) (31 g) was added, the test was conducted. The results are shown in Table 1.

Table 1

| | Solvent Resistance 1) | Precipitability 2) |
|---|---|---|
| Ex. 1 | o | o |
| 2 | o | o |
| 3 | o | o |
| 4 | o | o |
| 5 | o | o |
| Ref. Ex. 1 | x | x |
| 2 | o | x |

1) The sample (coating thickness: 20 μ) was baked at 140 °C for 20 minutes and examined.

Examination of solvent resistance:

Methyl isobutyl ketone was applied onto a defatted surface of the coating and vigorously rubbed ten times and examined as follows:

o: No change was observed.

x: Electrode-position coated film was exposed.

2) In the dissolution of the resin in Example 1, 33 wt% of aqueous solution (emulsion) was prepared, and after 480 hours at 30 °C, precipitability was estimated as follows:

o: No precipitates were observed.

x: Large amounts of precipitates were observed, which were not dissolved again by stirring.

## Claims

1. A cathodic electrodeposition paint composition which contains:
(A) a resin having an iodine value of 50-500, basic group of 30 - 300 mmol per 100 g of solid content and a molecular weight of 500 - 5,000, and
(B) a resin containing at least two benzene nuclei and one ethylenic vinyl group in one molecule and having

acidic group of 5 - 350 mmol per 100 g of solid content and a molecular weight of 500 - 5,000
wherein the ratio of basic group of the component (A) to the acidic group of the component (B) is 1 : 0.03 - 0.5, and is at least partly neutralized with an acid.

2. The cathodic electrodeposition paint composition according to claim 1, wherein said composition further contains 0.005 - 1.0 parts by weight (as metal) of water-soluble salt of metal, which accelerates oxidation polymerization, based on 100 parts by weight of solid content.

3. The cathodic electrodeposition paint composition according to claim 1 or 2, wherein said component (A) is a reaction product of:

(1) a polymeric compound with a molecular weight of 500 -5,000 and iodine value of 50 - 500 which contains C-C double bonds and 3 - 12 wt% of oxirane oxygen,

(2) 30 - 300 mmol of amine compound based on 100 g of the polymeric compound, which is indicated by the following general formula:

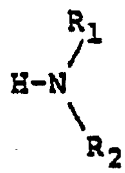

wherein $R_1$ and $R_2$ are $C_{1-20}$ hydrocarbon which may be partly substituted by hydroxyl group, and $R_1$ and $R_2$ can form a ring structure and said ring structure may contain unsaturated group, and

(3) 0 - 200 mmol of $\alpha,\beta$-unsaturated carboxylic acid based on 100 g of the above polymeric compound (1), which is indicated by the general formula:

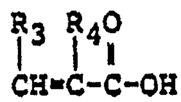

wherein $R_3$ and $R_4$ are hydrogen atoms or methyl groups or unsaturated fatty acid with a molecular weight of 100 - 350 containing more than 10 wt% of C-C conjugated double bonds or a mixture thereof.

4. The cathodic electrodeposition paint composition according to any one of claim 1 - 3, wherein said component (B) is a reaction product of partial esterification of epoxy(meth)acrylate resin or epoxy unsaturated fatty acid ester resin with dibasic anhydride or dibasic anhydride or dibasic acid.

5. The cathodic electrodeposition paint composition according to claim 1, which further contains 0.5 - 10 parts weight of maleinated polybutadiene, a product of partial esterification or partial amidation, $C_{6-24}$ unsaturated monocarboxylic acid and/or dimer thereof based on 100 parts by weight of solid content.